(19) Europäisches Patentamt

European Patent Office

Office européen des brevets

(11) EP 1 245 274 A2

(12) **EUROPEAN PATENT APPLICATION**

(43) Date of publication:
02.10.2002 Bulletin 2002/40

(51) Int Cl.7: **B01J 19/00**

(21) Application number: 02252356.7

(22) Date of filing: 28.03.2002

(84) Designated Contracting States:
AT BE CH CY DE DK ES FI FR GB GR IE IT LI LU
MC NL PT SE TR
Designated Extension States:
AL LT LV MK RO SI

(30) Priority: 28.03.2001 JP 2001094112

(71) Applicant: CANON KABUSHIKI KAISHA
Tokyo (JP)

(72) Inventors:
• Watanabe, Hidenori,
c/o CANON KABUSHIKI KAISHA
Ohta-ku, Tokyo (JP)

• Okamoto, Tadashi,
c/o CANON KABUSHIKI KAISHA
Ohta-ku, Tokyo (JP)
• Mihashi, Naoto, c/o CANON KABUSHIKI KAISHA
Ohta-ku, Tokyo (JP)

(74) Representative:
Beresford, Keith Denis Lewis et al
BERESFORD & Co.
2-5 Warwick Court,
High Holborn
London WC1R 5DH (GB)

(54) **Manufacturing method and apparatus for probe carriers**

(57) Method of manufacture of probe carriers and an apparatus used for the method in which the product of the Reynolds number (Re) and the Weber number (We), calculated from diameter and speed of a droplet of a probe solution, and density and surface tension of the probe solution, is set in the predetermined range:

$$0.26 \times 10^5 \leq Re \cdot We \leq 1.10 \times 10^5$$

In accordance with the present invention, there are achieved high uniformity of the area and shape in each probe arranged on the probe carrier, and less tendency to rebound at impact of the probe solution on the substrate.

MAIN SCANNING
DIRECTION

SUB SCANNING
DIRECTION

**FIG.1**

EP 1 245 274 A2

**Description**

The present invention relates to a manufacturing method for probe carriers on solid substrate and a manufacturing apparatus for probe carriers exclusively utilized for implementation of the manufacturing method. The present invention also relates to a liquid ejecting device for manufacturing probe carriers.

In carrying out base sequence analysis of gene DNAs or simultaneous multitudinous high-reliability gene diagnosis, it is necessary to classify DNAs having desired base sequences by using a plurality of obes. As a means for providing plurality of probes used for this classification works, DNA microchips are attracting attention. Further, in high-throughput screening of pharmaceuticals and development of pharmaceuticals by means of combinatorial chemistry, it is also necessary to carry out systematic screening of a large number (for example 96, 384 or 1536) of the solution of objective proteins and pharmaceuticals. For that purpose, there have been developed methods of arraying various pharmaceuticals, technology for automated screening with such array, special-purpose apparatuses and softwares for controlling sets of screening operations and statistical treatment of the results.

Fundamentally, these parallel screening operations use so-called probe carriers (probe arrays) in which known probes, that serve as means of classification of substances to be evaluated, are arrayed. These operations detect whether the substances act or react on probe materials under the same conditions. Generally, it is previously determined which action or reaction to probe materials is utilized, so that the probe materials provided in a probe carrier are roughly classified into one kind of material, such as a group of probe material for DNAs with different base sequences. Namely, the substances utilized as a group of probe materials are, for example, DNAs, proteins, synthesized chemical substances (pharmaceuticals) or the like. In many cases, probe carriers consisting of a group of plural kinds of probes are used. However, some screening operation can use probe carriers in which many DNAs with an identical base sequence, many proteins with an identical amino acid sequence, and identical chemical substances are arranged on a lot of points as a probe, depending upon characteristics of the screening operations. These are mainly used for pharmaceutical screening.

In probe carriers consisting of a group of plural kinds of probes (particularly, a group of DNAs with different base sequences, a group of proteins with different amino acid sequences, or a group of different chemical substances), the plural kinds forming the group are often arranged according to a predetermined sequence order. Among them, DNA probe carriers are used when conducting analysis of base sequence of a gene DNA or when conducting simultaneous multitudinous high-reliability gene diagnoses.

As one of a method for arranging a group of plural kinds of probes on a substrate, plural kinds of probe solutions are ejected sequentially onto the substrate from a liquid ejection device in a desired timing to arrange them on the substrate. There have been disclosed some inventions concerning liquid ejection devices based on ink jet technologies which are generally used for printers.

For example, Japanese Patent Application Laid-Open No. 11-187900 (1999) discloses a method for arranging probes on solid phase by attaching liquids containing probe materials on the solid phase as droplets ejected from a thermal ink jet head. In this method, the probe materials are DNAs which are synthesized and purified in advance. In some cases, the lengths of bases are confirmed before attaching them on the solid phase.

Further, European Patent Publication No. EP 0 703 825B1 describes a method for solid phase synthesis of plural kinds of DNA each having a determined base sequence by supplying nucleotide monomers and activator, that are utilized for solid phase synthesis of DNA, from separate piezoelectric jet nozzles. This method conducts the solid phase synthesis of DNA on a substrate and supplies solutions of substances required for the synthesis by ink jet method at each elongation stage.

As introduced above, the ink jet technology generally used for printers has been used as the conventional method for producing probe carriers.

However, some problems arose in preparation of probe carriers when printing (drawing) method adapted for printers applied as-is to arrangement of probes. This point will be described in detail below.

The test method using DNA probe carriers is generally carried out as follows. First, the DNA probe on the probe carrier base and the test substance are reacted. Here the test substance is bonded with a marker such as a fluorescent substance. The test substance reacts and associates with some of the probes on the probe carrier by hybridization. Washing of the probe carrier after hybridization leaves the fluorescent substance only where association occurred, and the amount of reaction is determined by measuring the amount of the fluorescent substance.

Area and shape of each probe on the probe carrier are very important in measuring the amount of fluorescent substance, since it is popular to measure optical intensity of fluorescent substances using a sensor. Even when ejection volume of probe solutions ejected from the liquid ejection device is uniform, if the areas and the shapes of the probes arranged on the substrate are not uniform, density of the arranged probe materials becomes uneven, making it difficult to quantify the reaction in each probe.

Further, in some cases, not only the shape of the probe formed on the substrate get distorted at the time of the probe solution being landed on the substrate, but also the probe solution may be adhered to the background area where the probe solution must not be present, due to splatter at impact of the probe solution on the substrate. Still further, in the case that the density of arrangement is high, coalescence of the adjacent probe areas may occur. If the above phenomena occur , the quantification of the reaction of the probe will become very difficult.

Thus, uniformity of areas and shapes of the probe solutions which are ejected and adhered onto the substrate is very important in probe carrier formation. Splatter at impact of the probe solution on the substrate must not occur in principle. Area and shape of the ink ejected and adhered onto the paper are also important for the ink jet head of a printer. However, the allowable range of unevenness in printing is larger than that required in manufacturing probe carriers. Therefore, if the ink jet method of a printer is applied to manufacture of probe carriers as it is, manufacture of good probe carriers cannot be attained.

On the other hand, among other characteristics which is desired for the liquid ejection device for manufacturing the probe carrier, is that probes can be produced without carrying out recovery operations if possible. As used herein, by "recovery operation" is meant suction of the probe solution from the nozzle and preliminary ejection of the liquid for the predetermined times before arranging the probe solution onto the glass substrate, in order to stabilize ejection state of the liquid.

Recovery operation is performed mainly after the liquid ejection device has not been ejected the liquid is performed over the predetermined time. For example, recovery operation is needed after exchange of the glass substrate onto which arranges probe solution, etc.

If the ejection of a liquid has not been performed over certain time, the liquid will become not to be ejected properly, since some ingredients in the probe solution may evaporate from a nozzle opening and physical-properties such as a viscosity may change. The period of idle (non-ejection) time after which the recovery operation become necessary and the extent of recovery operation to which the liquid ejection device become to eject the liquid properly, are dependent on the particular liquid ejection device.

Since the probe solution used is expensive, the liquid ejection device, which is capable of lowering the frequency of the recovery operation as possible, is desirable in producing probe carriers

Therefore, the present inventors found out that the important problems to be solved are arrivals of the probe solutions onto the substrate, in which the shape of the probe is close to a perfect circle and the frequency to carry out the recovery operation is lowered as possible.

The present invention solves the problem described above and is intended to provide a method of manufacturing a probe carrier, wherein each probe arranged on the probe carrier has extremely high homogeneity of the area and shape of the probe, the ejected probe solution do not tend to rebound and the frequency to carry out the recovery operation is lowered as possible in manufacturing the probe carrier using the liquid ejection device.

The present inventors found that the probe with very uniform area and shape can be arranged onto a probe carrier substrate by manufacturing the probe carrier, with setting the product of the Reynolds number and Weber number (which are calculated from the diameter, speed, density, surface tension and viscosity of the droplet of the probe solution ejected from the liquid ejection device) to the predetermined range, as the result of eager research to solve the problem described above.

The present inventors also found out that the production of the probe carrier become possible with gentle recovery operation by producing the probe carrier with setting the product of the Reynolds number and the Weber number in the predetermined range.

That is, the manufacture method of the probe carrier in accordance with one embodiment of the present invention that the above-mentioned purpose can be attained, is characterized by setting the product of Reynolds number and a Weber number to $0.26 \times 10^5$ or more and $1.10 \times 10^5$ or less.

The first embodiment of the present invention is a method of manufacturing probe carriers in which plural kinds of probes are arranged comprising the steps of:

ejecting plural kinds of probe solutions, which contain probe material specifically associable with a target material, from a liquid ejection device onto the substrate, wherein, in ejecting the probe solutions, the probe solutions are ejected while meeting the following conditions: $0.26 \times 10^5 \leq Re \cdot We \leq 1.10 \times 10^5$; wherein Re is a Reynolds number which is calculated by the equation of Re [arbitrary unit] $= \rho \cdot d \cdot v / \eta$; We is a Weber number calculated by the equation of We [arbitrary unit] $= \rho \cdot d \cdot v^2 / \sigma$; $\rho$ is the density of the probe solution in $[kg/m^3]$; d is the diameter of the droplet of the ejected probe solution in [m]; v is the ejection speed of the probe solution in [m/s]; $\eta$ is the viscosity of the probe solution in [Pa·s]; and $\sigma$ is the surface tension of the probe solution in [N/m].

The second embodiment of the present invention is a manufacturing apparatus for probe carriers having a substrate holding part capable of carrying a substrate in predetermined directions, and a liquid ejection device that moves in the direction perpendicular to the predetermined direction and ejects a probe solution specifically associable with target substances onto the substrate, wherein, the liquid ejection device ejects the probe solution under the following conditions: $0.26 \times 10^5 \leq Re \cdot We \leq 1.10 \times 10^5$; wherein Re is a Reynolds number which is calculated by the equation of Re [arbitrary unit] = $\rho \cdot d \cdot v / \eta$; We is a Weber number calculated by the equation of We [arbitrary unit] = $\rho \cdot d \cdot v^2 / \sigma$; $\rho$ is the density of the probe solution in [kg/m$^3$]; d is the diameter of the droplet of the ejected probe solution in [m]; v is the ejection speed of the probe solution in [m/s]; $\eta$ is the viscosity of the probe solution in [Pa·s]; and $\sigma$ is the surface tension of the probe solution in [N/m].

The above and other objects, effects, features and advantages of the present invention will become more apparent from the following description of embodiments thereof taken in conjunction with the accompanying drawings.

Fig. 1 is a schematic view showing an example of construction of a probe carrier manufacturing apparatus;

Fig. 2 is a schematic view showing an example of construction of a probe carrier;

Fig. 3 is a schematic cross-sectional view showing an example of construction of one of the liquid ejection units of a liquid ejection device; and

Fig. 4 is a schematic cross-sectional view showing an example of construction of one of the liquid ejection units of a liquid ejection device.

The manufacturing method of probe carriers of the present invention will be explained below in more detail. While the examples shown here are best embodiments of the present invention, the present invention is not limited by the examples.

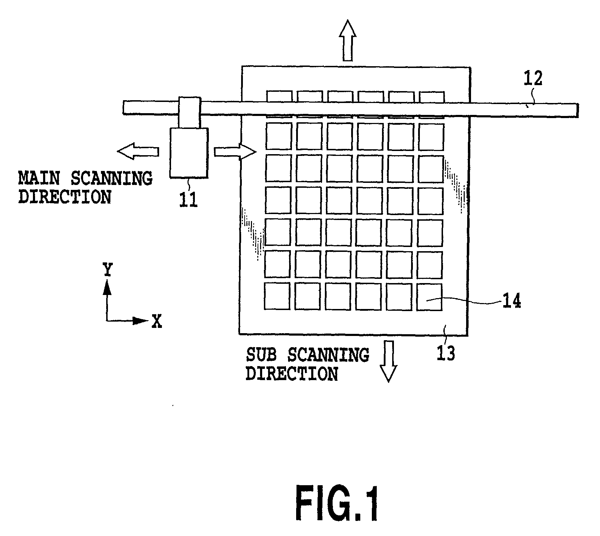

Fig. 1 shows a schematic view of the structure of a probe carrier manufacturing apparatus using a liquid ejection device. In Fig. 1, the reference numeral 11 denotes a liquid ejection device (means for ejecting liquid), the reference numeral 12 denotes a shaft for guiding the movement of the liquid ejection device substantially in the main scanning direction, the reference numeral 13 denotes a stage (substrate holding system) for holding the substrate of probe carriers, and the reference numeral 14 denotes a glass substrate that is the substrate for probe carriers.

The liquid ejection device 11 can be moved in the X direction in Fig. 1, and the stage 13 can be moved in the Y direction. Therefore, the liquid ejection device 11 can be two-dimensionally moved relative to the stage 13.

When the liquid ejection device 11 passes over the glass substrate 14 fixed to the stage 13, the probe solution is ejected from the liquid ejection device at desired timing to arrange the probe onto the glass substrate.

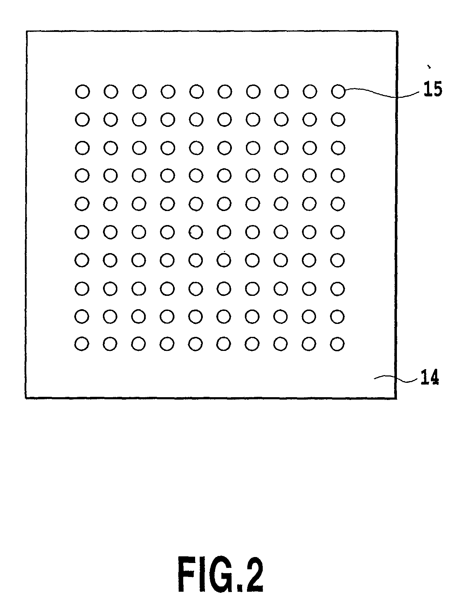

Fig. 2 shows a schematic view of a probe carrier. As shown in Fig. 2, in which probes 15 are arranged on the glass substrate 14.

When previously synthesized and purified probe materials (such as DNA) are arranged onto the substrate, the liquid ejection device 11 preferably has a structure provided with nozzles that can eject the same number of probe solutions as the number of probes arranged onto the glass substrate.

Preferably, the density of arrangement of the nozzles of the liquid ejection device equals to the density of arrangement of the probes in the probe carriers to be prepared, since the probe carrier can be prepared by one scanning of the liquid ejection device.

Further, while Fig. 1 shows the structure of a probe carrier manufacturing apparatus for arranging probes on plurality of fixed glass substrates 14, probes can also be arranged on a large glass substrate which is then cut to give plurality of probe carriers.

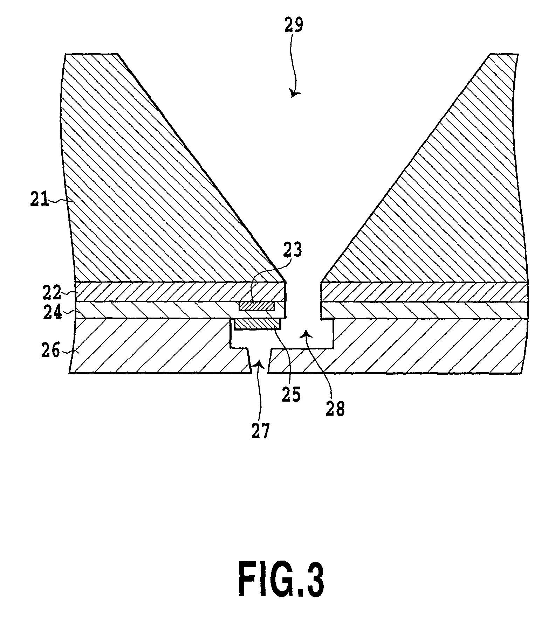

Fig. 3 is a schematic view showing one of the liquid ejection units of a liquid ejection device. The liquid ejection method includes the bubblejet method that ejects liquid by means of thermal energy generated by a heater, and the piezoelectric jet method that ejects liquid by means of deformation of piezoelectric elements caused by applying voltage to the elements. Fig. 3 shows the structure of a liquid ejection device of the bubblejet method.

In Fig. 3, the reference numeral 21 denotes a silicon base, the reference numeral 22 denotes an insulating layer, the reference numeral 23 denotes a heater consisting of TaN, TaSi, TaAl, etc., the reference numeral 24 denotes a passivation layer, the reference numeral 25 denotes a cavitation-resistant layer, the reference numeral 26 denotes the nozzle material, the reference numeral 27 denotes a nozzle, the reference numeral 28 denotes the flow path, and the reference numeral 29 denotes the feed opening.

The heater 23 is connected at both ends to wiring (not shown) of aluminum, etc., through which desired voltage pulses are applied at both ends of the heater 23.

The insulating layer 24 can be either thermal-oxide layer formed by thermal oxidation of the silicon substrate, or oxide or nitride layer formed by CVD.

The nozzle material 26 that form nozzles 27 and the flow paths 28 can be formed either by sticking nozzle material on which the nozzles and flow paths are already formed to the semiconductor substrate, or by using a semiconductor process based upon photolithography technology.

The feed opening 29 is formed by anisotropic etching of silicon using an aqueous solution of tetramethylammonium hydroxide (TMAH). In the case of a silicon base having (100) plane on the surface, an aperture is made at a slant against the surface of the base, whose angle is 54.7° as shown in Fig. 3. The feed opening 29 feeds the probe solution from the rear surface of the substrate to the front surface of the substrate, and also functions as a liquid reservoir for holding liquid.

When only a small number of probe carriers are manufactured and amount of probe solution ejected onto a probe is small, there are cases where the amount of probe solution existing in the feed opening is sufficient for manufacture of a series of the probe carriers. When the probe solutions should be ejected in larger amount, secondary reservoirs (not shown) connected to the feed openings 29 are provided.

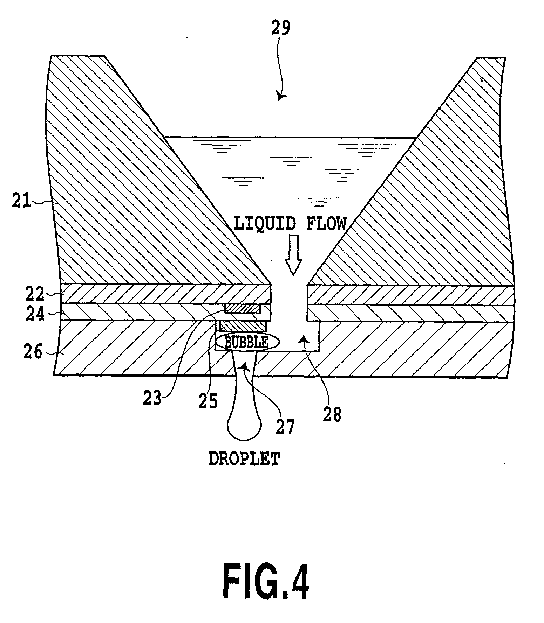

The probe solution is led from the feed opening 29 on the rear surface of the substrate through the flow path 28 to the nozzle 27 on the front surface of the substrate as shown in Fig. 4. When desired voltage pulse is applied at both ends of the heater 23, the probe solution near the heater is superheated to cause film-boiling, and the liquid is ejected as shown in Fig. 4.

In order to eject probe solutions stably, it is essential to give rise to film-boiling stably. In order to give rise to film-boiling stably, it is desirable to apply voltage pulse of 0.1 to 5 μs to the heater.

The amount of probe solution ejected at one time from a nozzle is appropriately selected, taking account of various factors such as viscosity of probe solutions, affinity of probe solutions with the solid substrate , and reactivity of probe materials with the solid substrate, and according to the shape and dot size of the probe formed. Aqueous solvent is generally used for the probe solutions. In the method of the present invention, the volume of droplets of probe solutions ejected from each nozzle of the liquid ejection device is generally selected within the range of 0.1 pl to 100 pl. The nozzle diameter, etc., are preferably designed to fit the above volume.

The area occupied by array units (dots) on which the probe solution is applied is generally 0.01 $\mu m^2$ to 40000$\mu m^2$. determined by the size of the probe carrier itself and the density of arrangement of the probes.

In the present invention, the probes fixed to the substrate are specifically associable with specific target substances. In the embodiment of the present invention, the target substances are nucleic acids, and the probes are single-strand nucleic acids which have complemental base sequence to the whole or part of the target nucleic acid, so that the probes can specifically hybridize with the base sequence of the target nucleic acid. Further, the probes include oligonucleotides, polynucleotides, and other polymers that can recognize specific targets. The term "probe" means both of individual molecules having probe functions such as polynucleotide molecules and a mass of molecules having same probe functions fixed on the surface at separate positions such as polynucleotides with same sequences, often including molecules so-called ligands. Further, probes and targets are often exchangeably used, and the probes are substances either associable with targets as parts of ligand-antiligand (sometimes called receptor) pairs or changeable to substances that associate thereto. The probes and targets in the present invention can include bases found in nature and similar substances.

Examples of probes held on the substrate include oligonucleotides having base sequences hybridizable to target nucleic acids and having a bonding part to the substrate via linkers, the probe having structures connected to the surface of the substrate in the bonding part. The probe is preferably single-strand nucleic acid which has base sequence complemental to all or part of target nucleic acid and can hybridize specifically with the target nucleic acid. Further, in such a configuration the positions of the bonding part to the substrate in the oligonucleotide molecules are not limited as far as desired hybridization reaction is not damaged.

The probes adopted in the probe carriers manufactured by the method of the present invention are appropriately selected in their purpose of use. In order to implement the method of the present invention appropriately, the probes are preferably DNAs, RNAs, cDNAs (complementary DNAs), PNAs, oligonucleotides, polynucleotides, other nucleic acids, oligopeptides, polypeptides, proteins, enzymes, substrates for enzymes, antibodies, epitopes for antibodies, antigens, hormones, hormone receptors, ligands, ligand receptors, oligosaccharides, or polysaccharides, of which two or more can be used in combination if necessary.

In the present invention, plural kinds of these probes fixed on the separate regions (such as dot-shaped spots) of the surface of the carrier substrate (including internal surfaces of hollow or ring shaped carriers) are called "probe carrier", and those arranged at determined intervals are called "probe array".

It is desirable that probe materials have structures bondable to the surface of the carrier substrate, and are bonded to the surface of the carrier substrate utilizing such bondable structures after ejection and application of probe solutions. The structures bondable to the surface of the carrier substrate can be formed by introducing organic functional groups such as amino, mercapto, carboxyl, hydroxyl, acid halide (-COX), halogen, aziridine, maleimide, succinimide, isothiocyanate, sulfonyl chloride ($-SO_2Cl$), aldehyde (-CHO), hydrazine, and iodoacetamide groups into the probe material molecules in advance. In that case, it is also necessary to introduce structures (organic functional groups) onto the surface of the substrate in advance, that form covalent bonds by reacting with the various functional groups described above. For example, when the probe material has amino groups, succinimide ester, isothiocyanate, sulfonyl chloride, or aldehyde can be introduced on the surface of the substrate. When the probe material has mercapto (thiol) groups, maleimide can be introduced on the surface of the substrate. When a glass substrate is used as the carrier substrate, desired functional groups can be introduced on the surface thereof using a silane coupling agent having desired functional groups as well as a cross linker having desired functional groups.

Next the structure characteristic of the present invention will be explained.

(Effects of liquid ejecting conditions on the shape of the probe)

The bubblejet type liquid ejection device explained using Fig. 3 can vary ejection volume and ejection speed by varying size of the heater, structure of flow path such as height and width, shape of the nozzles such as diameter and height, and shape of applied voltage pulses.

The shape of probes on the probe carrier was observed using a probe solution containing DNA oligomer as a probe material dissolved at a concentration of 8 μM (about 0.005 % by weight) in a solution of the composition shown in Table 1, and varying ejection volume and ejection speed of the probe solution. The shape of probes was observed visually using a microscope.

Table 1

| ingredient | content (% by weight) |
|---|---|
| glycerin | 7.5 |
| thiodiglycol | 7.5 |
| urea | 7.5 |
| acetylene alcohol (trademark:acetylenol, available from Kawaken Chemical Co.) | 1.0 |
| water | 76.5 |

Physical properties of the solution with the composition shown above are shown in Table 2. Viscosity was measured at room temperature using a cone-plate type rotational viscometer (RE-80-L from Toki Sangyo), and surface tension was measured at room temperature using a static surface tension meter (Wilhelmy method; CBVP-A3 from Kyowa Interface Science Co. Ltd.).

Table 2

| Physical properties | measured value |
|---|---|
| density($\rho$) | $1.05 g/cm^3 = 1.0 \times 10^3 kg/m^3$ |
| viscosity($\eta$) | $1.90 cP = 1.90 \times 10^{-3} Pa \cdot s$ |
| surface tension($\sigma$) | $30.0 dyne/cm = 3.00 \times 10^{-2} N/m$ |

(1) 30 pl of ejection volume (i.e. volume of one droplet of the ejected solution)

Probe carriers were produced using a liquid ejection device which could achieve 30 pl of ejection volume, with varying the ejection speed from 10, 12.5, 15, 16, 17 to 18 m/s, and the shape of the resulting probes was then observed. When a droplet of 30 pl was ejected, the diameter of the droplet became about 38 μm.

In the case that ejection speeds were 10, 12.5, 15 and 16 m/s, the shape of the probe arranged on the substrate is close to a perfect circle. Moreover, there were observed no aggravation of the shape of the probe or no adhesion of small droplets of the probe solution, which were mainly due to rebound of the droplet on impact of the droplet on the substrate.

On the other hand, in the case that ejection speed was 18 m/s, there was observed noticeable adhesion of the small droplet of the probe solution, the onset of deviation of the shape of the probe from a perfect circle, and the variation of the shape of each probe.

In addition, in either of the above ejection speeds, normal ejection of the probe solution could be realized by relatively gentle recovery operation of several hundred to several thousand times of preliminary ejection, even after non-ejecting interval of from several minutes to several ten minutes.

(2) 24 pl of ejection volume

Probe carriers were produced using a liquid ejection device which could achieve 24 pl of ejection volume, with varying the ejection speed from 10, 12.5, 15 to 20 m/s, and the shape of the resulting probes was then observed. When a droplet of 24 pl was ejected, the diameter of the droplet became about 33 μm.

In the case that ejection speeds were 10, 12.5 and 15 m/s, the shape of the probe arranged on the substrate is close to a perfect circle. Moreover, there were observed no aggravation of the shape of the probe or no adhesion of small droplets of the probe solution, which were mainly due to rebound of the droplet on impact of the droplet on the substrate.

On the other hand, in the case that ejection speed was 20 m/s, there was observed noticeable adhesion of the small droplet of the probe solution, which was mainly due to rebound of the droplet on impact of the droplet on the substrate.

In addition, in the cases of 12.5, 15 and 20 m/s of the ejection speeds, normal ejection of the probe solution could be realized by relatively gentle recovery operation of several hundred to several thousand times of preliminary ejection, even after non-ejecting interval of from several minutes to several ten minutes. However, in the case of 10 m/s of the ejection speed, normal ejection of the probe solution could not be realized by relatively gentle recovery operation of several hundred to several thousand times of preliminary ejection.

(3) 15 pl of ejection volume

Probe carriers were produced using a liquid ejection device which could achieve 15 pl of ejection volume, with varying the ejection speed from 10, 12.5, 15, 18.5 to 20 m/s, and the shape of the resulting probes was then observed. When a droplet of 15 pl was ejected, the diameter of the droplet became about 30 μm.

In the case that ejection speeds were 10, 12.5, 15 and 18.5 m/s, the shape of the probe arranged on the substrate is close to a perfect circle. Moreover, there were observed no aggravation of the shape of the probe or no adhesion of small droplets of the probe solution, which were mainly due to rebound of the droplet on impact of the droplet on the substrate.

On the other hand, in the case that ejection speed was 20 m/s, there was observed noticeable adhesion of the small droplet of the probe solution, which was mainly due to rebound of the droplet on impact of the droplet on the substrate.

In addition, in the cases of 12.5, 15, 18.5 and 20 m/s of the ejection speeds, normal ejection of the probe solution could be realized by relatively gentle recovery operation of several hundred to several thousand times of preliminary ejection, even after non-ejecting interval of from several minutes to several ten minutes. However, in the case of 10 m/s of the ejection speed, normal ejection of the probe solution could not be realized by relatively gentle recovery operation of several hundred to several thousand times of preliminary ejection.

(4) 8 pl of ejection volume

Probe carriers were produced using a liquid ejection device which could achieve 8 pl of ejection volume, with varying the ejection speed from 10, 12.5, 15, 18, 20 to 22 m/s, and the shape of the resulting probes was then observed. When a droplet of 8 pl was ejected, the diameter of the droplet became about 24 μm.

In the case that ejection speeds were 10, 12.5, 15, 18 and 20 m/s, the shape of the probe arranged on the substrate is close to a perfect circle. Moreover, there were observed no aggravation of the shape of the probe or no adhesion of small droplets of the probe solution, which were mainly due to rebound of the droplet on impact of the droplet on the substrate.

On the other hand, in the case that ejection speed was 22 m/s, there was observed noticeable adhesion of the small droplet of the probe solution, which was mainly due to rebound of the droplet on impact of the droplet on the substrate.

In addition, in the cases of 15, 18 and 20 m/s of the ejection speeds, normal ejection of the probe solution could be realized by relatively gentle recovery operation of several hundred to several thousand times of preliminary ejection, even after non-ejecting interval of from several minutes to several ten minutes. However, in the cases of 10 and 12.5 m/s of the ejection speed, normal ejection of the probe solution could not be realized by relatively gentle recovery operation of several hundred to several thousand times of preliminary ejection.

(5) 4.5 pl of ejection volume

Probe carriers were produced using a liquid ejection device which could achieve 4.5 pl of ejection volume, with varying the ejection speed from 10, 12.5, 15, 20 to 25 m/s, and the shape of the resulting probes was then observed. When a droplet of 4.5 pl was ejected, the diameter of the droplet became about 20 μm.

In the case that ejection speeds were 10, 12.5, 15 and 20 m/s, the shape of the probe arranged on the substrate is close to a perfect circle. Moreover, there were observed no aggravation of the shape of the probe or no adhesion of small droplets of the probe solution, which were mainly due to rebound of the droplet on impact of the droplet on the substrate.

On the other hand, in the case that ejection speed was 25 m/s, there was observed noticeable adhesion of the small droplet of the probe solution, which was mainly due to rebound of the droplet on impact of the droplet on the substrate.

In addition, in the cases of 15, 20 and 25 m/s of the ejection speeds, normal ejection of the probe solution could be realized by relatively gentle recovery operation of several hundred to several thousand times of preliminary ejection, even after non-ejecting interval of from several minutes to several ten minutes. However, in the cases of 10 and 12.5 m/s of the ejection speed, normal ejection of the probe solution could not be realized by relatively gentle recovery operation of several hundred to several thousand times of preliminary ejection.

As described above, the shape of the probes on the probe carrier produced by using the liquid ejection device become better, close to a perfect circle, when using lower ejection speed or lower ejection volume. It should be also noted that the shape of probe is not determined simply by the ejection speed.

Also, for recovery operation to eject a solution properly, the larger ejection speed, or the larger ejection volume, the gentler recovery operation can realize the proper ejection.

As an earnest consideration of the above phenomena, the present inventors found out that the quality of the shape of the probe could be estimated by the following relational expression:

conditions capable of realizing good shape of the probe:

$$0.26 \times 10^5 \leq Re \cdot We \leq 1.10 \times 10^5 \qquad\qquad (1):$$

wherein

Re is the Reynolds number calculated by the equation of Re [arbitrary unit] = $\rho \cdot d \cdot v/\eta$;
We is the Weber number calculated by the equation of We [arbitrary unit] = $\rho \cdot d \cdot v^2/\sigma$;
$\rho$ is the density of the probe solution in [kg/m$^3$];
d is the diameter of the droplet of the ejected probe solution in [m];
v is the ejection speed of the probe solution in [m/s] ;
$\eta$ is the viscosity of the probe solution in [Pa·s]; and
$\sigma$ is the surface tension of the probe solution in [N/m].

Table 3 summarizes the above result, in relation to the expression (1). In "rating 1" of Table 3, the symbol "O" denotes that good shape of the probe was observed by microscopy. The symbol "X" denotes that one of the following defects was observed: collapsing of the shape of the probe; adhesion of the small droplet of the probe solution, which was mainly due to rebound of the droplet on impact of the droplet on the substrate.

In "rating 2" of Table 3, the symbol "O" denotes that proper ejection state of the probe solution can be maintained by performing gentle (i.e. low amount or small times) recovery operations. The symbol "X" denotes that the proper ejection state cannot be maintained by the same recovery operation as above.

Further, in "overall rating" of Table 3, the symbol "O" denotes that both of the rating 1 and rating 2 are "O". The symbol "X" denotes that either of the rating 1 or the rating 2 is "X".

Table 3 shows that the relational expression is met under the conditions which result in good shape of the probe and stable ejection state.

Table 3

| Vd [pl] | d [μm] | v [m/s] | Re [-] | We [-] | Re.We [x10$^5$] | rating 1 | rating 2 | overall rating |
|---|---|---|---|---|---|---|---|---|
| 30 | 38 | 10 | 210 | 133 | 0.27 | O | O | O |
| | | 12.5 | 263 | 208 | 0.55 | O | O | O |
| | | 15 | 315 | 299 | 0.94 | O | O | O |
| | | 16 | 336 | 340 | 1.14 | X | O | X |
| | | 17 | 357 | 384 | 1.37 | X | O | X |
| | | 18 | 378 | 431 | 1.63 | X | O | X |

Table 3   (continued)

| Vd [pl] | d [µm] | v [m/s] | Re [-] | We [-] | Re.We [x10$^5$] | rating 1 | rating 2 | overall rating |
|---|---|---|---|---|---|---|---|---|
| 24 | 33 | 10 | 182 | 156 | 0.21 | O | X | X |
| | | 12.5 | 228 | 180 | 0.41 | O | O | O |
| | | 15 | 274 | 260 | 0.71 | O | O | O |
| | | 20 | 365 | 462 | 1.69 | X | O | X |
| 15 | 30 | 10 | 166 | 105 | 0.17 | O | X | X |
| | | 12.5 | 207 | 164 | 0.34 | O | O | O |
| | | 15 | 249 | 236 | 0.59 | O | O | O |
| | | 18.5 | 307 | 359 | 1.10 | O | O | O |
| | | 20 | 332 | 420 | 1.39 | X | O | X |
| 8 | 24 | 10 | 133 | 84 | 0.11 | O | X | X |
| | | 12.5 | 166 | 131 | 0.212 | O | X | X |
| | | 15 | 189 | 189 | 0.38 | O | O | O |
| | | 18 | 239 | 272 | 0.65 | O | O | O |
| | | 20 | 265 | 336 | 0.89 | O | O | O |
| | | 22 | 292 | 407 | 1.19 | X | O | X |
| 4.5 | 20 | 10 | 111 | 70 | 0.08 | O | X | X |
| | | 12.5 | 138 | 109 | 0.15 | O | X | X |
| | | 15 | 166 | 158 | 0.26 | O | O | O |
| | | 20 | 221 | 280 | 0.62 | O | O | O |
| | | 25 | 276 | 438 | 1.21 | X | O | X |

(Effects of physical properties of the liquid on the shape of the probe)

Next, the physical properties of the above-described probe solution were changed, and it was investigated what kind of change arises in the shape of the probe arranged onto a substrate. In particular, concentration of glycerin in the probe solution was varied for changing the physical properties of the probe solution. The probe solution was ejected onto the substrate using a liquid ejection device which is capable of ejection of 15 pl of the probe solution, and then the shape of the probe so-produced was observed.

By varying the concentration of glycerin in the probe solution having the above-described composition (see Table 1), the physical properties were changed as shown in Table 4. In addition, there were almost no change in surface tension with varying the concentration of glycerin.

Table 4

| concentration of glycerin [wt.%] | ρ [g/cm$^3$] | η [cP] |
|---|---|---|
| 5.0 | 1.04 | 1.5 |
| 6.5 | 1.05 | 1.8 |
| 7.5 | 1.05 | 1.9 (the above conditions) |
| 10.0 | 1.06 | 2.2 |
| 17.5 | 1.07 | 2.5 |
| 20 | 1.08 | 2.6 |

When these solution was ejected in the same conditions, the ejection volume Vd, the ejection speed v, and the diameter d of a droplet was changed as shown in Table 5.

In the case that the concentration of glycerin was 7.5, 10, 17.5 and 20 wt. %, the shape of the probe arranged on the substrate is good. In the case that the concentration of glycerin was 5.0 wt. %, there were noticeable adhesions of the small droplets of the probe solution and the shape of the probe became a collapsed circle. Further, in the case that the concentration of glycerin was 6.5 wt. %, there were observed only slight adhesions of the small droplets of the probe solution.

In addition, in the cases of 5.0, 6.5, 7.5, 10 and 17.5 wt.% of the concentration of glycerin, normal ejection of the probe solution could be realized by relatively gentle recovery operation of several hundred to several thousand times of preliminary ejection operation, even after non-ejecting interval of from several minutes to several ten minutes. However, in the cases of 20 wt.% of the concentration of glycerin, normal ejection of the probe solution could not be realized by similarly gentle recovery operation as described above.

Also in these consideration, the Reynolds number, the Weber number, and the product thereof are shown in Table 5, in similar manner described above. Table 5 clearly shows that, in the case that the physical properties of the probe solution is changed, the quality of the shape of the probe also depends on whether the product of the Reynolds number and the Weber number falls into the range from $0.26 \times 10^5$ to $1.10 \times 10^5$, inclusive, or not.

Table 5

| conc. of glycerin [wt.%] | Vd [pl] | d [μm] | v [m/s] | Re [-] | We [-] | Re·We [x$10^5$] | rating 1 | rating 2 |
|---|---|---|---|---|---|---|---|---|
| 5 | 16 | 31 | 20.5 | 441 | 452 | 1.99 | X | O |
| 6.5 | 15 | 30 | 19 | 333 | 379 | 1.26 | X | O |
| 7.5 | 15 | 30 | 18.5 | 307 | 359 | 1.10 | O | O |
| 10 | 14 | 29 | 16 | 224 | 262 | 0.59 | O | O |
| 17.5 | 13 | 28 | 13 | 156 | 169 | 0.26 | O | 0 |
| 20 | 13 | 28 | 12 | 140 | 145 | 0.20 | O | X |

As shown in the above result, when producing probe carriers by ejecting probe solutions from a liquid ejection device, it is possible to produce probe carriers of the preferred embodiments in which the probe has a shape close to a perfect circle, and to lower the frequency of the recovery operation which is needed for stabilizing the ejection from the liquid ejection device, as a result of performing a design for the liquid ejection device and a preparation of the probe solution to produce probe carriers such that the product of the Reynolds number and the Weber number falls into the range of $0.26 \times 10^5$ to $1.10 \times 10^5$, inclusive.

Further, it is obvious that the same advantages are achieved where jet type liquid ejecting device with piezoelectric element is used, even though the foregoing description explains the case where bubblejet type liquid ejecting device are used as an example.

A typical structure and operational principle thereof is disclosed in U.S. patent Nos. 4,723,129 and 4,740,796, and it is preferable to use this basic principle to implement such a system. Although this system can be applied either to on-demand type or continuous type liquid ejection systems, it is particularly suitable for the on-demand type apparatus. This is because the on-demand type apparatus has electrothermal transducers, each disposed on a sheet or liquid passage that retains liquid, and operates as follows: first, one or more drive signals are applied to the electrothermal transducers to cause thermal energy corresponding to manufacturing information; second, the thermal energy induces sudden temperature rise that exceeds the nucleate boiling so as to cause the film boiling on heating portions of the liquid ejecting device; and third, bubbles are grown in the liquid corresponding to the drive signals. By using the growth and collapse of the bubbles, the ink is expelled from at least one of the ink ejection orifices of the head to form one or more ink drops. The drive signal in the form of a pulse is preferable because the growth and collapse of the bubbles can be achieved instantaneously and suitably by this form of drive signal. As a drive signal in the form of a pulse, those described in U.S. patent Nos. 4,463,359 and 4,345,262 are preferable. In addition, it is preferable that the rate of temperature rise of the heating portions described in U.S. patent No. 4,313,124 be adopted to achieve better probe formation.

U.S. patent Nos. 4,558,333 and 4,459,600 disclose the following structure of a liquid ejecting device, which is incorporated to the present invention: this structure includes heating portions disposed on bent portions in addition to a combination of the ejection orifices, liquid passages (linear passages or right-angled passages) and the electrothermal transducers disclosed in the above patents. Moreover, the present invention can be applied to structures disclosed in Japanese Patent Application Laid-open Nos. 59-123670 (1984) and 59-138461 (1984) in order to achieve similar effects. The former discloses a structure in which a slit common to all the electrothermal transducers is used as ejection orifices of the electrothermal transducers, and the latter discloses a structure in which openings for absorbing pressure waves caused by thermal energy are formed corresponding to the ejection orifices. Thus, irrespective of the type of the liquid ejecting device, the present invention can achieve manufacture of probe carriers positively and effectively.

The present invention can be also applied to a so-called full-line type liquid ejecting device whose length equals the maximum length across a stage. Such a liquid ejecting device may consist of a plurality of liquid ejecting devices combined together, or one integrally arranged liquid ejecting device.

In addition, the present invention can be applied to various serial type liquid ejecting devices: a liquid ejecting device fixed to the main assembly of a manufacturing apparatus; a conveniently replaceable chip type liquid ejecting device which is electrically connected to the main assembly of a manufacturing apparatus, and is supplied with ink therefrom when the device is loaded on the main assembly.

In the method for manufacturing probe carriers of the present invention, when the probe solution arrives onto the substrate using a liquid ejection device, the probe carriers are produced by performing a design for the liquid ejection device and a preparation of the probe solution to produce probe carriers such that the product of the Reynolds number and the Weber number falls into the range of 0.26 x $10^5$ to 1.10 x $10^5$, inclusive. In accordance with the present invention, it is possible to produce probe carriers of the preferred embodiments in which the probe has a shape close to a perfect circle, and to lower the frequency of the recovery operation which is needed for stabilizing the ejection form the liquid ejection device.

The present invention has been described in detail with respect to preferred embodiments, and it will now be apparent from the foregoing to those skilled in the art that changes and modifications may be made without departing from the invention in its broader aspect, and it is the intention, therefore, in the apparent claims to cover all such changes and modifications as fall within the true spirit of the invention.

**Claims**

1. A method of manufacturing probe carriers in which plural kinds of probes are arranged comprising the steps of:

    ejecting plural kinds of probe solutions, which contain probe material specifically associable with a target material, from a liquid ejection device onto a substrate,

    **characterised in that**, in ejecting said probe solutions, said probe solutions are ejected while meeting the following conditions:

$$0.26 \text{ x } 10^5 \leq \text{Re·We} \leq 1.10 \text{ x } 10^5;$$

    wherein Re is a Reynolds number which is calculated by the equation of Re = $\rho \cdot d \cdot v / \eta$;
    We is a Weber number calculated by the equation of We = $\rho \cdot d \cdot v^2 / \sigma$;
    $\rho$ is the density of the probe solution in [kg/m$^3$];
    d is the diameter of the droplet of the ejected probe solution in [m];
    v is the ejection speed of the probe solution [m/s];
    $\eta$ is the viscosity of the probe solution in [Pa·s]; and
    $\sigma$ is the surface tension of the probe solution in [N/m].

2. A method as claimed in claim 1, comprising applying thermal energy to probe solutions in order to eject probe solutions from said liquid ejection device.

3. A manufacturing apparatus for probe carriers **characterised by** having:

    a substrate holding part capable of carrying a substrate in predetermined directions, and
    a liquid ejection device movable in the direction perpendicular to said predetermined direction and operable to eject a probe solution specifically associable with target substances onto said substrate;

    wherein, said liquid ejection device ejects the probe solution under the following conditions:

$$0.26 \text{ x } 10^5 \leq \text{Re·We} \leq 1.10 \text{ x } 10^5;$$

wherein Re is a Reynolds number which is calculated by the equation of $Re = \rho \cdot d \cdot v / \eta$;

We is a Weber number calculated by the equation of $We = \rho \cdot d \cdot v^2 / \sigma$;

$\rho$ is the density of the probe solution in [kg/m$^3$];

d is the diameter of the droplet of the ejected probe solution in [m];

v is the ejection speed of the probe solution [m/s];

$\eta$ is the viscosity of the probe solution in [Pa·s]; and

$\sigma$ is the surface tension of the probe solution in [N/m].

4. A manufacturing apparatus as claimed in claim 3, wherein said liquid ejection device comprises a thermal energy generating element that generates thermal energy for applying to probe solutions in order to eject probe solutions.

5. A manufacturing apparatus as claimed in claim 3, wherein said liquid ejection device comprises a piezoelectric element that is deformable in response to an applied voltage, such that probe solutions are ejected from the liquid ejection device by deformation of said piezoelectric element.

6. A method as claimed in claim 1 comprising applying a voltage to a piezoelectric element to cause deformation of said piezoelectric element in order to eject probe solutions from said liquid ejection device.

7. A method according to any one of claims 1, 2 or 6 comprising forming a plurality of probe carriers on a substrate and dividing the substrate to separate the probe carriers.

MAIN SCANNING
DIRECTION

SUB SCANNING
DIRECTION

## FIG.1

# FIG.2

**FIG.3**

**FIG.4**